# EUROPÄISCHE PATENTANMELDUNG

(11) **EP 3 026 479 A1**
(43) Veröffentlichungstag der Anmeldung: **01.06.2016**
(21) Anmeldenummer: 14195452.9
(22) Anmeldetag: 28.11.2014
(51) Int. Cl.: G02B 15/00, G02B 5/18, G02B 26/08, H04N 5/232, G02B 7/36, G01D 5/36, G06K 7/10

(54) **Kamerasystem**

(71) Anmelder: SICK AG, 79183 Waldkirch (DE)
(72) Erfinder: Ringwald, Siegfried, 79215 Elzach (DE); Blöhbaum, Frank, 79312 Emmendingen (DE)
(74) Vertreter: Ludewigt, Christoph

(57) **Zusammenfassung**

Die Erfindung betrifft ein Kamerasystem mit wenigstens einer Kamera mit einer Empfangsoptik, die ein Bild einer Szene auf ein Empfängerarray abbildet und eine Auswerteeinheit, wobei die Empfangsoptik eine Fokussierungseinrichtung aufweist, die zwei DOEs umfasst, die mittels einer Antriebseinheit zur Verstellung der Fokuslage der Empfangsoptik gegeneinander verdrehbar sind. Erfindungsgemäß ist in der Auswerteeinheit eine Kontrasterkennungseinheit vorgesehen, mit der ein Ist-Parameter ermittelbar ist, der ein Maß für den Kontrastreichtum des mit dem Empfängerarray aufgenommenen Bildes ist und dass eine Regelschleife gebildet ist, indem die Antriebseinheit mit der Auswerteinheit gekoppelt ist und die Auswerteeinheit ein Stellsignal für die Antriebseinheit bereitstellt, wobei das Stellsignal vom Ist-Parameter abhängig ist, um in der Regelschleife die Fokussiereinrichtung so einzustellen, dass das Bild einen möglichst hohen Kontrast aufweist.

## Beschreibung

Die Erfindung betrifft ein Kamerasystem nach dem Oberbegriff des Anspruchs 1.

Ein derartiges Kamerasystem ist aus der WO 2009/012789 A1 bekannt. Der große Vorteil an diesem System, also des Einsatzes zweier relativ zueinander verdrehbarer DOEs (Diffractive Optical Elements) ist, dass lineare Bewegungen von Objektiven mit häufig relativ großen Massen (50-200g) nicht mehr notwendig sind. Das erspart nicht nur recht lange und schwere Motoren, sondern reduziert auch den Verschleiß. Weitere Vorteile sind Unempfindlichkeit gegenüber Schockvibration, längere Lebensdauer, kleinere Hysterese in der Brennweite und der geringere Temperaturgang.

Trotz dieser Vorteile besteht dennoch Bedarf an verbesserten Eigenschaften dieser Kamerasysteme, um sie in industriellen Umgebungen einsetzen zu können.

Diese Aufgabe wird gelöst mit einem Kamerasystem nach Anspruch 1.

Das neue Kamerasystem umfasst wenigstens eine Kamera mit einer Empfangsoptik, die ein Bild einer Szene auf ein Empfängerarray abbildet und eine Auswerteeinheit, wobei die Empfangsoptik eine Fokussierungseinrichtung aufweist, die zwei DOEs umfasst, die mittels einer Antriebseinheit zur Verstellung der Fokuslage der Empfangsoptik gegeneinander verdrehbar sind. Erfindungsgemäß ist in der Auswerteeinheit eine Kontrasterkennungseinheit vorgesehen, mit der ein Ist-Parameter ermittelbar ist, der ein Maß für den Kontrastreichtum des mit dem Empfängerarray aufgenommenen Bildes ist und dass eine Regelschleife gebildet ist, indem die Antriebseinheit mit der Auswerteinheit gekoppelt ist und die Auswerteeinheit ein Stellsignal für die Antriebseinheit bereitstellt, wobei das Stellsignal vom Ist-Parameter abhängig ist, um in der Regelschleife die Fokussiereinrichtung so einzustellen, dass das Bild einen möglichst hohen Kontrast aufweist.

Der wesentliche Vorteil des erfindungsgemäßen Kamerasystems besteht darin, dass damit eine sehr schnelle und optimale Fokussierung möglich ist, die den Einsatz des Kamerasystems an einer industriellen, automatisch laufenden Anlage erlaubt. Zum Beispiel können an einer automatischen Paketsortieranlage die verschieden hohen Pakete mit der erfindungsgemäßen Kamera in verbesserter Weise automatisch erfasst werden, denn mit der Erfindung sind bessere Bildqualitäten möglich, die zu besseren Leseraten bei automatischer Lesung eines Codes führen. Solche Codes können verschiedenster Art sein, wie z. B. QR-Code, Barcode, Klarschriften (OCR), Farbcodes oder dergleichen mehr.

Für eine relative Verdrehung der DOEs zueinander reicht es aus, wenn eines der DOEs feststeht und das andere mit der Antriebseinheit gedreht wird. Die Antriebseinheit kann sehr klein und platzsparend ausgeführt sein. Dabei ist es besonders vorteilhaft und spart zusätzliche Bauteile ein, wenn das feststehende DOE eine Frontscheibe eines Kameragehäuses bildet und das drehbare DOE im Inneren des Gehäuses angeordnet ist.

Zum Schutz des die Frontscheibe bildenden DOEs kann dieses eine Passivierungschicht aufweisen, um z. B. Feuchtigkeitsaufnahme, die eine Verschiebung der DOE-Strukturen durch Aufquillen bewirken könnte, zu verhindern.

Vorteilhafterweise greift die Antriebseinheit am Umfang des DOE an, um dieses zu drehen.

In Weiterbildung der Erfindung sollte die Antriebseinheit derart ausgebildet ist, dass die DOEs relativ zueinander hochgenau positioniert werden können. Das bedeutet, dass eine Positionierung im sub-µm Bereich sinnvoll ist, denn die DOE-Strukturen haben selber eine Größe von ca. 1 µm. In entsprechend feiner Winkelauflösung muss eine Positionierung der DOEs zueinander möglich sein.

In kostengünstiger Weise sind die DOEs in einem Spritzgussverfahren hergestellt. Zur Positionierung weisen sie Justiermarken auf, die als einfache Marken oder auch als refraktive oder diffraktive Strukturen ausgebildet sein können.

Alternativ oder zusätzlich weist das zu positionierende drehbare DOE eine Maßverkörperung auf wie man sie von Drehgebern her kennt und über die eine Erfassung des Drehwinkels und damit eine hochgenaue Positionierung möglich ist.

Um störendes Umgebungslicht zu unterdrücken, weist wenigstens eines der DOE eine Filterbeschichtung auf, mit der der Spektralbereich gefiltert werden kann, so dass nur das gewünschte Licht zum Empfänger durchgelassen wird und das Störlicht blockiert wird.

Wenn das drehbare DOE kontinuierlich gedreht wird, wird ein Fokusbereich permanent periodisch durchfahren. Das kann in automatischen Anwendungen vorteilhaft sein, wenn z. B. viele verschiedene Fokuspositionen auftreten. Dann kann es einfacher sein, das DOE kontinuierlich zu drehen, so dass der gesamte Fokusbereich periodisch durchfahren wird und immer dann eine Aufnahme auszulösen, wenn das Bild scharf ist, also der Bildkontrast am höchsten ist. Die Regelschleife dient dann zur Auslösung des Bildes.

Dies lässt sich auch vorteilhaft nutzen, wenn das Kamerasystem mehrere, aber wenigstens zwei Kameras, aufweist und die Antriebseinheiten für die drehbaren DOEs der beiden Kameras synchronisiert sind. Dann wird ein bestimmter Raumbereich im Sichtfeld der Kameras durchfahren.

Im Folgenden wird die Erfindung anhand von Ausführungsbeispielen unter Bezugnahme auf die Zeichnung im Einzelnen erläutert. In der Zeichnung zeigen:
- Fig. 1: eine stark schematische Ansicht eines erfindungsgemäßen Kamerasystems;
- Fig. 2: eine schematische Darstellung eines Kamerasystems mit zwei Kameras.

Ein erfindungsgemäßes Kamerasystem 10 umfasst wenigstens eine Kamera 12 mit einer Empfangsoptik 14, die ein Bild einer Szene 16 auf ein Empfängerarray 18 abbildet. In einer Auswerteeinheit 20 erfolgt die Auswertung der Signale des Empfängerarrays 18. An einem Ausgang 22 kann das Bild oder sonstige Information ausgegeben werden.

Die Empfangsoptik 14 weist eine Fokussierungseinrichtung 24 auf, die zwei DOEs 26 und 28 umfasst, die mittels einer Antriebseinheit 30 zur Verstellung der Fokuslage der Empfangsoptik 14 gegeneinander verdrehbar sind. "DOE" bedeutet "Diffraktive Optische Element", wie sie aus der WO 2009/012789 A1 bekannt sind. Solcher Art DOEs dienen der Fokussierung optischer Strahlung, wobei die Fokuslage durch gegenseitiges Verdrehen der DOEs änderbar ist.

In diesem Ausführungsbeispiel ist das eine DOE 28 feststehend und bildet eine ein Gehäuse 32 der Kamera 12 abschließende Frontscheibe. Das andere DOE 26 ist drehbar gehalten und kann über die Antriebseinheit 30, die an dem Umfang des DOE 26 angreift, gedreht werden. Die Antriebseinheit 30 und die beiden DOEs 26 und 28 bilden somit die Fokussiereinrichtung 24.

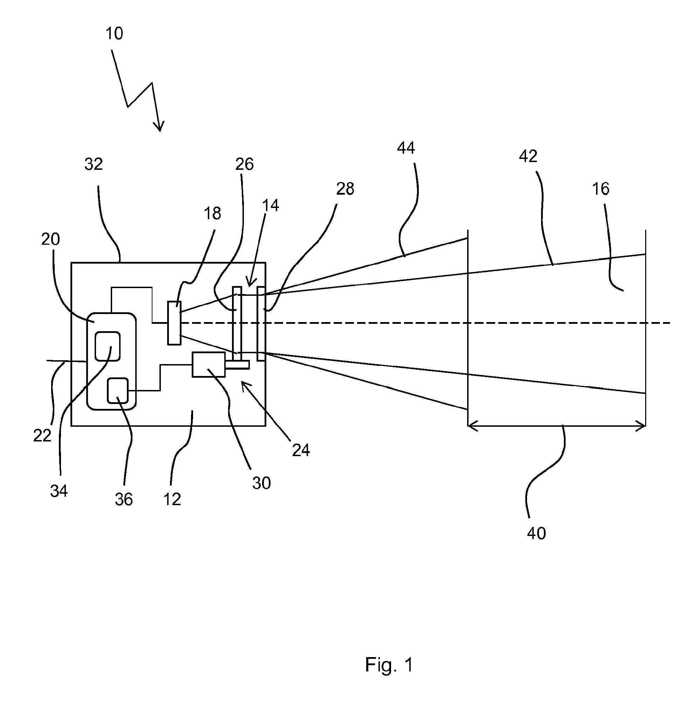

Der damit erreichbare Fokussierungsbereich, der periodisch durchfahren wird, ist in Fig. 1 schematisch durch den Doppelpfeil angedeutet.

Die Auswerteeinheit 20 umfasst eine Kontrasterkennungseinheit 34, mit der ein Ist-Parameter ermittelbar ist, der ein Maß für den Kontrastreichtum des mit dem Empfängerarray 18 aufgenommenen Bildes ist. Weiter ist die Auswerteinheit 20 mit der Antriebseinheit 30 gekoppelt und liefert ein Stellsignal zur Ansteuerung der Antriebseinheit 30 zur Einstellung der Fokuslage. Zum Schutz des die Frontscheibe bildenden DOEs 28 kann dieses eine Passivierungschicht aufweisen.

Das Stellsignal ist vom Ist-Parameter abhängig, so dass eine Regelschleife gebildet ist, um in der Regelschleife die Fokussiereinrichtung so einzustellen, dass das Bild einen möglichst hohen Kontrast aufweist, der Kontrastreichtum also möglichst groß ist. Aus der Bildverarbeitung sind Algorithmen zur Ermittlung eines Kontrastreichtums, also des Ist-Parameters, bekannt.

Dabei ist die Antriebseinheit 30 derart ausgebildet, dass das DOE 26 hochgenau positioniert werden kann. Das bedeutet, dass eine Positionierung im sub-µm Bereich möglich ist, denn die DOE-Strukturen haben typischerweise eine Größe von ca. 1 µm. Um eine solche Positionierung zu ermöglichen, muss die Winkelpositionierung des DOEs 26 entsprechend genau sein.

Für eine solche Positionierung ist es beispielsweise sinnvoll, wenn das DOE 26 Justiermarken aufweist, die als einfache Marken oder auch als refraktive oder diffraktive Strukturen ausgebildet sein können. Alternativ oder zusätzlich weist das drehbare DOE 26 eine Maßverkörperung auf, wie man sie von Drehgebern her kennt. Mit einem ebenfalls von Drehgebern bekannten optischen Lesekopf kann die Maßverkörperung abgetastet werden und über die Auswerteeinheit 20, die die Signale des optischen Lesekopfes auswertet, kann die Antriebseinheit 30 über das Stellsignal entsprechend angesteuert werden. Über die von Drehgebern bekannte Technik ist damit eine hochgenaue Positionierung möglich.

In kostengünstiger Weise sind die DOEs in einem Spritzgussverfahren hergestellt.

Um störendes Umgebungslicht zu unterdrücken, weist wenigstens eines der DOEs 26 oder 28 eine Filterbeschichtung auf, mit der der Spektralbereich gefiltert werden kann, so dass nur das gewünschte Licht zum Empfänger durchgelassen wird und das Störlicht blockiert wird. Dazu ist es sinnvoll eine Beleuchtung für die Szene 16 vorzusehen, die genau die Wellenlänge aufweist, die die Filterbeschichtung durchlässt.

Eine solche nicht dargestellte Beleuchtungseinrichtung kann in analoger Weise ebenfalls eine Fokussierungseinrichtung aufweisen, die analog zur Fokussierungseinrichtung 24 der Kamera 12 ausgebildet ist, also auch zwei gegeneinander verdrehbare DOEs aufweist, um das Licht genau auf den Abstand zu fokussieren, auf den die Fokussiereinrichtung 24 der Kamera 12 eingestellt ist. Dazu sind die beiden Fokussiereinrichtungen sinnvollerweise synchronisiert.

In einer Ausgestaltung der Erfindung wird das drehbare DOE 26 kontinuierlich gedreht und damit der Fokusbereich 40 permanent periodisch durchfahren und immer dann eine Aufnahme ausgelöst, wenn das Bild scharf ist, also der Bildkontrast am höchsten ist. Die vorgenannte Regelschleife dient dann zur Auslösung des Bildes.

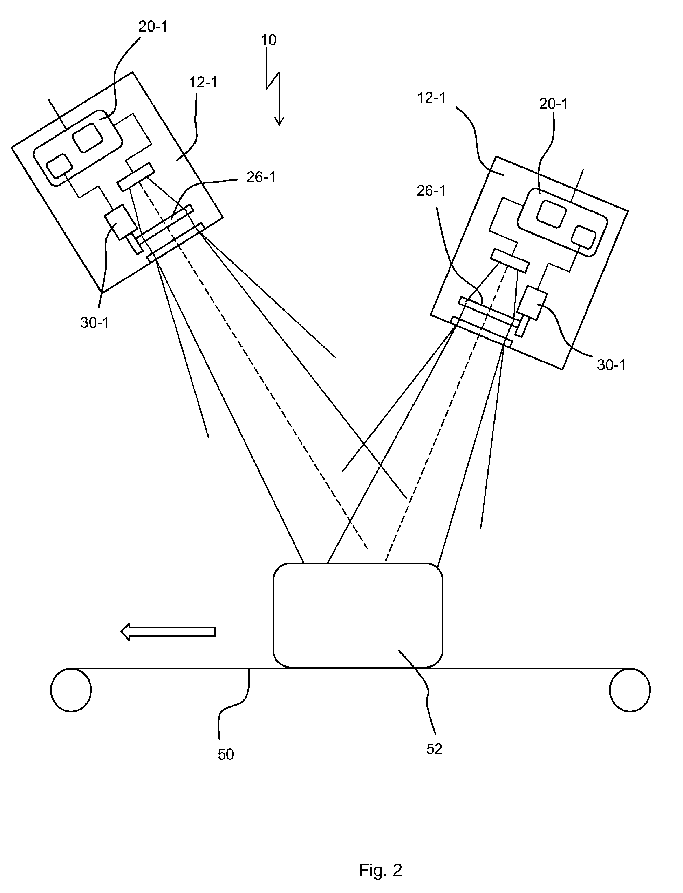

Fig. 2 zeigt eine beispielhafte Anwendung des erfindungsgemäßen Kamerasystems 10, bei der zwei Kameras 12-1 und 12-2 vorgesehen sind, die eine Szene, hier ein Förderband 50, auf dem zu identifizierende Pakete 52 gefördert werden, in unterschiedlichen Abständen erfassen. Vorteilhafterweise sind die Antriebseinheiten 30-1 und 30-2 für die drehbaren DOEs 26-1 und 26-2 der beiden Kameras 12-1 und 12-2 synchronisiert. Dann kann ein gemeinsamer Sichtbereich der beiden Kameras zeitgleich durchfahren werden und Aufnahmen der Szene von beiden Kameras zu dem selben Zeitpunkt erfolgen. Der Ist-Parameter, der die Aufnahme auslöst, muss nur von einer der Auswerteeinheiten 20-1 oder 20-2 berechnet werden. Das spart Rechenzeit und kann die Erfassungszeit verkürzen und letztlich den Durchsatz gelesener Pakete 52 erhöhen.

## Patentansprüche

1. Kamerasystem mit wenigstens einer Kamera (12) mit einer Empfangsoptik (14), die ein Bild einer Szene (16) auf ein Empfängerarray (18) abbildet und mit einer Auswerteeinheit (20), wobei die Empfangsoptik (14) eine Fokussierungseinrichtung (24) aufweist, die zwei DOEs (26, 28) umfasst, die mittels einer Antriebseinheit (30) zur Verstellung der Fokuslage der Empfangsoptik (14) gegeneinander verdrehbar sind,
**dadurch gekennzeichnet,**
**dass** in der Auswerteeinheit (20) eine Kontrasterkennungseinheit (34) vorgesehen ist, mit der ein Ist-Parameter ermittelbar ist, der ein Maß für den Kontrastreichtum des mit dem Empfängerarray (18) aufgenommenen Bildes ist und dass eine Regelschleife gebildet ist, indem die Antriebseinheit (30) mit der Auswerteinheit (20) gekoppelt ist und die Auswerteeinheit (20) ein Stellsignal für die Antriebseinheit (30) bereitstellt, wobei das Stellsignal vom Ist-Parameter abhängig ist, um in der Regelschleife die Fokussiereinrichtung (24) so einzustellen, dass das Bild einen möglichst hohen Kontrast aufweist.

2. Kamerasystem nach Anspruch 1, **dadurch gekennzeichnet, dass** eines der DOE feststeht und das andere mit der Antriebseinheit gedreht wird.

3. Kamerasystem nach einem der vorhergehenden Ansprüche, **dadurch gekennzeichnet, dass** das feststehende DOE eine Frontscheibe eines Kameragehäuses bildet und das drehbare DOE im Inneren des Gehäuses angeordnet ist.

4. Kamerasystem nach einem der vorhergehenden Ansprüche, **dadurch gekennzeichnet, dass** die Antriebseinheit an den Umfang des DOE angreift.

5. Kamerasystem nach einem der vorhergehenden Ansprüche, **dadurch gekennzeichnet, dass** die Antriebseinheit derart ausgebildet ist, dass die DOEs relativ zueinander hochgenau (sub µm) positioniert werden können.

6. Kamerasystem nach einem der vorhergehenden Ansprüche, **dadurch gekennzeichnet, dass** die DOEs in einem Spritzgussverfahren oder Prägeverfahren hergestellt sind und Justiermarken zur Positionierung aufweisen.

7. Kamerasystem nach einem der vorhergehenden Ansprüche, **dadurch gekennzeichnet, dass** das drehbare DOE eine Maßverkörperung aufweist (zur Winkelablesung, Erfassung Winkel, Positionierung).

8. Kamerasystem nach einem der vorhergehenden Ansprüche, **dadurch gekennzeichnet, dass** wenigstens eines der DOE eine Filterbeschichtung aufweist, mit dem ein Spektralbereich gefiltert werden kann (weniger Störlicht).

9. Kamerasystem nach einem der vorhergehenden Ansprüche, **dadurch gekennzeichnet, dass** das die Frontscheibe bildende DOE eine Passivierungschicht aufweist.

10. Kamerasystem nach einem der vorhergehenden Ansprüche, **dadurch gekennzeichnet, dass** das drehbare DOE kontinuierlich gedreht wird.

11. Kamerasystem mit wenigstens zwei Kameras nach einem der vorhergehenden Ansprüche, wobei deren Antriebseinheiten synchronisiert sind.
